# EUROPEAN PATENT APPLICATION

(11) **EP 1 741 688 A1**
(43) Date of publication of application: **10.01.2007**
(21) Application number: 05730145.9
(22) Date of filing: 06.04.2005
(51) Int. Cl.: C04B 41/91

(54) **METHOD OF SURFACE MODIFICATION FOR THERMAL SHOCK RESISTANCE AND MEMBER THEREOF**

(30) Priority: 12.04.2004 JP 2004116529
(71) Applicant: Japan Science and Technology Agency, Kawaguchi-shi, Saitama 332-0012 (JP); National University Corporation Nagoya University, Nagoya-shi, Aichi 464-8601 (JP); SINTOKOGIO, LTD., Nagoya-shi, Aichi-ken 450-0002 (JP)
(72) Inventor: SAKA, Hiroyasu, Kasugai-shi, Aichi 487-0017 (JP); MOON, Won-Jin, 311-1 Wolpyeong-3 Dong, Seo Gu, Deajeon 302-748 (KR); UCHIMURA, Shouji, Nagoya-shi, Aichi 458-0833 (JP); ITO, Toshiro, Toyokawa-shi, Aichi 442-0068 (JP)
(74) Representative: McCluskie, Gail Wilson
(86) International application number: PCT/JP2005/007111
(87) International publication number: WO 2005/100283

(57) **Abstract**

A method for improving surface thermal shock resistance of a member made of ceramics to which thermal shock resistance is required comprising, forming homogeneously distributed linear dislocation structure on the surface of the member made of ceramics to which thermal shock resistance is required by blasting abrasives composed of fine particles whose average particle size is from 5 µm to 200 µm and whose surface shape is convex, wherein Vickers hardness (HV) of said fine particles is 800 or more and equal to or less than the hardness of the member made of ceramics to which thermal shock resistance is required.

## Description

### FIELD OF THE INVENTION

The present invention relates to a method for improving thermal shock resistance of a member made of ceramics to which thermal shock resistance against rapid heating-cooling cycle in wide temperature range from room temperature to 1500°C is required, further, relates to a member having thermal shock resistance obtained by said method.

In the present invention, a member made of ceramics to which thermal shock resistance is required indicates a high temperature structural material to which heat cycle resistance and thermal shock resistance are required, for example, dome for etcher, electrostatic chuck, vacuum chuck, suscepter, handling arm, dummy wafer, wafer heater, window of high temperature reaction furnace, reaction tube of diffusion furnace and wafer boat which composes semiconductor producing equipment, and thermocouple protecting tube, radiant tube for aluminum alloy melting, stoke for low pressure casting, stirring propeller for aluminum alloy melting, sleeve for die cast, piping component, high temperature bearing, shaft, heat sink substrate for power module, heat radiation insulated substrate and turbine blade.

### BACKGROUND OF THE INVENTION

At producing process for semiconductor, an electrostatic chuck is used as a method to fix and maintain a semiconductor wafer in each process such as transportation of semiconductor wafer, pattern formation, formation of thin film of CVD or sputtering, plasma cleaning, etching or dicing. An electrostatic chuck is a member to fix and maintain a semiconductor wafer on an adsorption face of the electrostatic chuck by obtaining electrostatic adsorption force by charging electric voltage to the electrostatic chuck. At a thin film forming process or a plasma cleaning process, since the electrostatic chuck suffers rapid heating and cooling with adsorbing a semiconductor wafer, excellent thermal conductivity and high thermal shock resistance are required to the electrostatic chuck.

Further, as a member to fix and to hold a semiconductor wafer, a vacuum chuck which uses vacuum adsorption force is also used besides an electrostatic chuck. Also in this case, since rapid heating and cooling is loaded to the vacuum chuck with adsorbing a semiconductor wafer, excellent thermal conductivity and high thermal shock resistance are required to the electrostatic chuck.

Furthermore, excellent resistance to multiple heat cycle or thermal shock are required for a suscepter which is used at placing a semiconductor wafer at forming process of epitaxial growth film on surface of semiconductor wafer by CVD method or for a dummy wafer which is used at investigation, evaluation or inspection of various treatment condition such as sputtering treatment, CVD treatment, ion implantation processing or thermal diffusion treatment or used for adherence prevention of contamination substance in producing process of semiconductor wafer.

In JP4-61331A publication (Document 1), among above mentioned structural members, subjects relates to dummy wafer are mentioned. That is, it is recorded that strength against strain caused by formed film thickness can be improved by enlarging thickness of silicon substrate. Further, in JP11-278966A publication (Document 2), it is recorded that by forming very fine and voidless SiC film on a surface of basic material which consists from any of sintered product of SiC, Si₃N₄ or AlN at least, a member is remarkably excellent in resistance to heat cycle or resistance to thermal shock.

However, in a case to shorten a temperature elevating time for further shortening of a cleaning time aiming to improve productivity, above mentioned conventional technology has following problem.

A dummy wafer whose basic material is silicon mentioned in Document 1 has a problem of easily cracking by thermal shock caused by rapid temperature elevation. In the meanwhile, resistance for heat cycle or resistance to thermal shock of a member on which SiC is formed by chemical vapor deposition method mentioned in Document 2 are fairly improved. However, to the requirement for further rapid temperature elevation along with the recent requirement for effectiveness of current semiconductor production process, the member is not reaching the place which guarantees the sufficient reliability. In W. Pfeiffer and T. Frey. "Shot Peening of Ceramics: Damage or Benefit", Ceramic forum international Cfi/Ber. Dkag79 No.4, E25(2002) (Document 3), shot blast condition is recited and relationship between blasting material or blasting pressure and toughening characteristic is discussed. However, in this Document, relationship between shot blast and dislocation density of homogeneously distributed linear dislocation which can be measured by a transmission electron microscope or thermal shock resistance is not referred.

Concerning above mentioned problems which conventional technology has, the subject of the present invention is can be summarized as follows. That is, provision of a ceramic materials whose thermal shock resistance is improved, wherein said ceramic materials is characterized that being difficult to cause cracks by thermal shock by rapid temperature elevating and cooling, shortening cleaning time remarkably and being possible to improve productivity of silicon wafer thereby, further, provision of a method for improvement of thermal shock resistance of the ceramic materials.

For the purpose to find out a method to improve thermal shock resistance of a ceramics materials, the inventors of the present invention make a trial of fine blast working at room temperature to a ceramics product to which thermal shock resistance is required, and find out that a dislocation which improves thermal shock resistance can be formed by a specific condition of fine blast working and the subject of the present invention is accomplished. By finding out above mentioned technique, a member which has strong mechanical strength against thermal shock accompanied to rapid temperature elevation can be designed, and by applying said technique to an electronics field, that is, to a producing apparatus of semiconductor, display or a optical communication device, said cleaning time can be remarkably shortened and can improve productivity of silicon wafer and others.

### DISCLOSURE OF THE INVENTION

The 1^{st} one of the present invention is (1) a method for improving surface thermal shock resistance of a member made of ceramics to which thermal shock resistance is required comprising, forming homogeneously distributed linear dislocation structure on the surface of the member made of ceramics to which thermal shock resistance is required by blasting abrasives composed of fine particles whose average particle size is from 5 µ m to 200 µm and whose surface shape is convex, wherein Vickers hardness (HV) of said fine particles is 800 or more and equal to or less than the hardness of the member made of ceramics to which thermal shock resistance is required. Desirably, the 1^{st} one of the present invention is (2) the method for improving surface thermal shock resistance of a member made of ceramics to which thermal shock resistance is required of (1), wherein plastic working is carried out by blasting pressure; 0.1-0.5MPa, blasting speed; 20m/sec-250m/sec, blasting amount 50g/min-800g/min, blasting time; 1sec/cm² - 60sec/cm². More desirably the 1^{st} one of the present invention is (3) the method for improving surface thermal shock resistance of a member made of ceramics to which thermal shock resistance is required of (1) or (2), wherein the homogeneously distributed linear dislocation on the surface of the member made of ceramics to which thermal shock resistance is required forms a dislocation structure whose dislocation density is 1 × 10⁴ - 9 × 10¹³cm⁻².

And, the 2^{nd} one of the present invention is (4) a thermal shock resistance member comprising, a basic material composing a member made of ceramics to which thermal shock resistance is required is at least consists from any of alumina, silicon nitride, SIALON, aluminum nitride or silicon carbide, forming a dislocation structure of dislocation density from 1 × 10⁴ to 9 × 10¹³cm⁻² of homogeneously distributed linear dislocation which is measured by a transmission electron microscope on the surface of the basic material.
Desirably, the 2^{nd} one of the present invention is (5) the thermal shock resistance member of (4), wherein the member made of ceramics to which thermal shock resistance is required is a dome for etcher, an electrostatic chuck, a vacuum chuck, a suscepter, a handling arm, a dummy wafer, a heater for wafer heating, window of a high temperature reaction furnace, a reaction tube of diffusion furnace, a wafer boat, a thermocouple protecting tube, a radiant tube for aluminum alloy melting, a stoke for low pressure casting, a stirring propeller for aluminum alloy melting, sleeve for die cast, piping component, a high temperature bearing, a shaft, a heat sink substrate for power module, heat radiation insulated substrate and turbine blade.

### EFFECT OF THE INVENTION

A structure member, which is obtained by forming a structure having said characteristics and by treating, has a structure existing by less than several 10 micron of dislocation density from 1 × 10⁴ to 9 × 10¹³cm⁻², which is measured by a transmission electron microscope. And by having this structure, characteristics of thermal shock resistance and heat cycle resistance are improved. As a basic material which can form said structure and can improve thermal shock resistance, a basic material made of ceramics whose thermal shock resistance is high is basically desirable. Especially, single crystal alumina (sapphire), high purity alumina, silicon nitride, SIALON, aluminum nitride and silicon carbide are superior.

### BRIEF ILLUSTRATION OF DRAWINGS

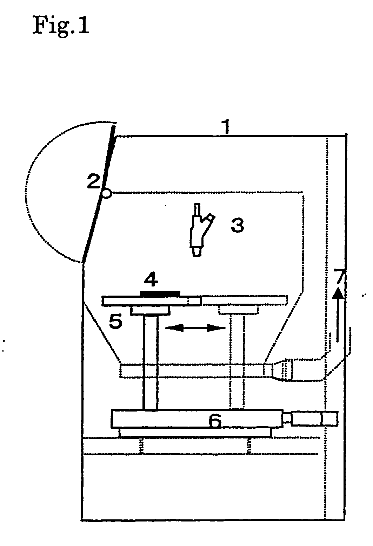

Fig. 1 is a conceptual drawing of a device of the present invention which carries out blasting treatment to accomplish plastic working at ordinary temperature. 1 is a cabinet of the device, 2 is a door of the cabinet, 3 is a blasting nozzle, 4 is a work piece to be processed (ceramics to be treated), 5 is X-Y table, 6 is a driving part of the X-Y table and 7 is a recovery equipment of blasting abrasives (blasting material for formation of surface toughening structure).

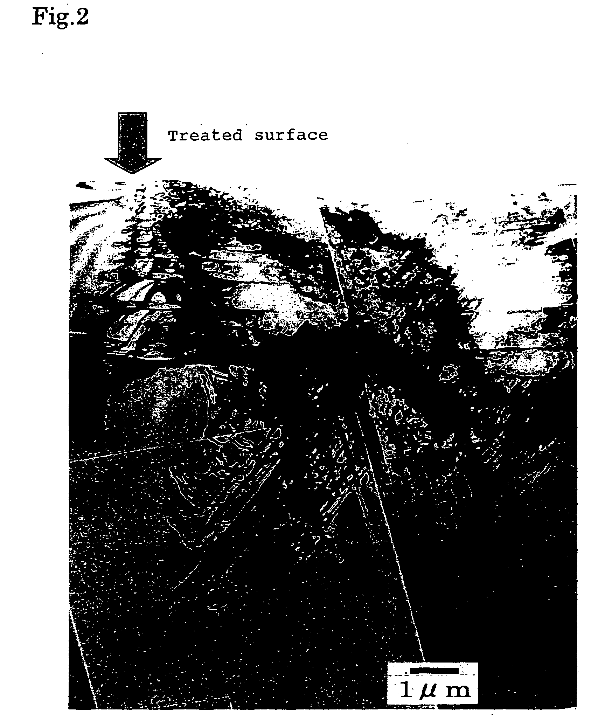

Fig. 2 is a transmission electron microscopic picture of a structure forming homogeneously distributed linear dislocation obtained by a method for surface toughening of the present invention, allow mark indicates a treated surface and can be observed that dislocation density of surface side is higher.

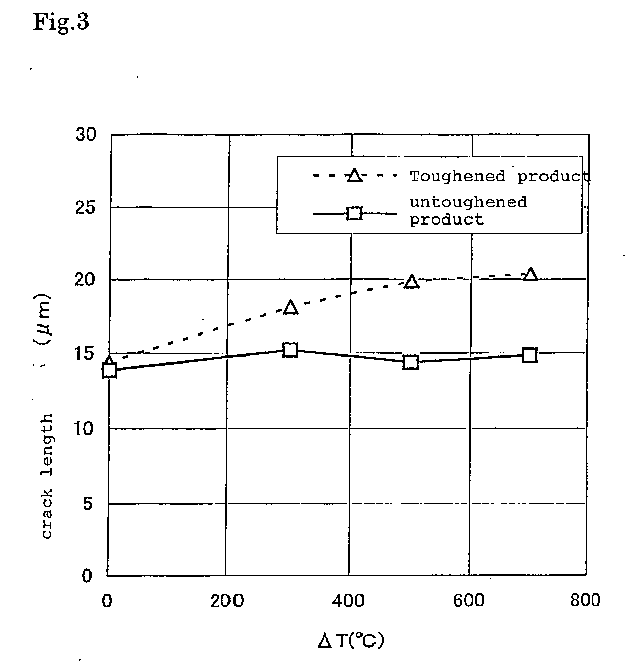

Fig.3 shows the characteristics of thermal shock temperature difference of alumina specimen of Example 3 by relationship between temperature difference and progress of crack (length). It is obvious that thermal shock resistance is improved in the processed specimen.

### DESCRIPTION OF THE PREFERRED EMDODIMENT

Fig.1 is a device (Product of SINTOBRATOR, Ltd.; product name is microblaster MBI) to carry out fine blasting working treatment which accomplishes plastic working at ordinary temperature of the present invention. Since a work shown in Fig.1 is a tabular ceramics product 4, blasting abrasives for plastic working which are different along with the ceramic product to be treated are blasted from a blasting nozzle 3 toward the ceramic product to be treated which is held by a product holding parts composed of X-Y direction drivable table by adjusting blasting pressure and blasting amount B of blasting abrasives for plastic working. Same effect can be obtained by making the blasting nozzle possible to be driven to X-Y direction. Used blasting abrasives for plastic working can be recovered by a recovery equipment 7 and separated from degraded blasting abrasives, then reused. Blasting abrasives can be blasted with air or can be blasted with liquid same as liquid horning. Blasting speed 20m/sec-250m/sec is a condition when blasting abrasives are blasted vertically toward the surface of a specimen. And the lower limit of blasting speed is a limitation from a view point of workability of plastic working (fine blast working) treatment, and the upper limit is to restrict the region in which a problem such as chipping is not caused.
A. As mentioned above, as a basic material, a ceramics which has excellent thermal shock resistance is desirable. Among the ceramics materials having high thermal shock resistance, single crystal alumina (sapphire), high purity alumina, silicon nitride, SIALON, aluminum nitride and silicon carbide are selected and a test pieces are prepared using these materials and fine blast working treatment is carried out on these test pieces and deformed to have a structure existing by dislocation density from 1 × 10⁴ to 9 × 10¹³cm⁻² measured by a transmission electron microscope by less than several 10 micron.
B. Technical effect of the present invention is indicated. Actual testing method for thermal shock resistance of polycrystal will be illustrated as follows.
   A square test piece prescribed in JIS test piece size of each ceramics are prepared and surface treatment according to above mentioned item A is carried out. On the square test piece, a test for thermal shock resistance prescribed in thermal shock test (JIS R1615 : This standard was abolished on January 20th, 2002. At the present, it is correspondent to JIS R1648.) is carried out.

That is, a test piece, which is heated to the desired temperature, is thrown into water and an existence of the generation of the crack is investigated. This action is repeated by elevating heating temperature until a crack is observed in the test piece by the thermal shock. Thermal stress is caused on the test piece by the difference of cooling rate between surface part and inner part, and when said thermal stress generates stronger tensile stress than tensile strength of the test piece, crack occurs.

Test conditions of said thermal shock resistance test are, (1) test piece size: 3 × 4 × 40mm, (2) temperature of test piece: 150 - 1000 °C, (3) temperature of water: 20°C.

Kind of blasting abrasives, blasting pressure, blasting amount and treating time can be experimentally decided in the conditions mentioned in claim 1 and claim 2. Desirable condition of blasting pressure is 0.1-0.5MPa.

The present invention will be illustrated more in detail according to Examples. However, these Examples are intending to make the usefulness of the present invention more clear, and not intending to limit the scope of the present invention.

Instrument for Measurement;
(1) Dislocation density and structure: Thin film specimen for TEM observation is prepared by an Focused Ion Beam Apparatus (Hitachi F-2000) and the structural characteristics is observed by a transmission electron microscope (TEM) JEOL-200CX (accelerating voltage: 200kV), product of JAPAN ELECTRON OPTICS LABORATORY CO., Ltd. Dislocation density can be obtained by measuring the dislocation length per unit volume. Concretely, the dislocation density is measured by following procedure, that is, (1) measure the thickness of a thin film specimen, (2) take a TEM observation picture of the point where dislocation density is measured, (3) measure the length of dislocation contained in the unit volume.
(2) Thermal shock resistance test: JIS R1615

### Thermal shock resistance test of Examples 1-10 and Comparative Examples 1-6

In Table 1-1 and Table 1-2, surface roughness, dislocation density, thermal shock resistance and improved ratio of thermal shock resistance temperature of a structural member obtained by changing blasting abrasives and blasting condition (Example 1-10) are shown in comparison with specimen of Comparative Examples (Comparative Examples 1-6) to which blast working is not carried out.

As a specimen, high purity alumina (alumina 99.5%) of hardness 1600HV, high purity alumina (alumina 99.99%) of hardness 1700HV, silicon nitride, SIALON, aluminum nitride and silicon carbide are used. Thermal shock resistance test is carried out in accordance with JIS R1615.

Dislocation density mentioned in Table 1-1 and Table 1-2 are measuring results by TEM observation of specimen to which fine blast working is carried out vertically to the surface of specimen from thickness direction.

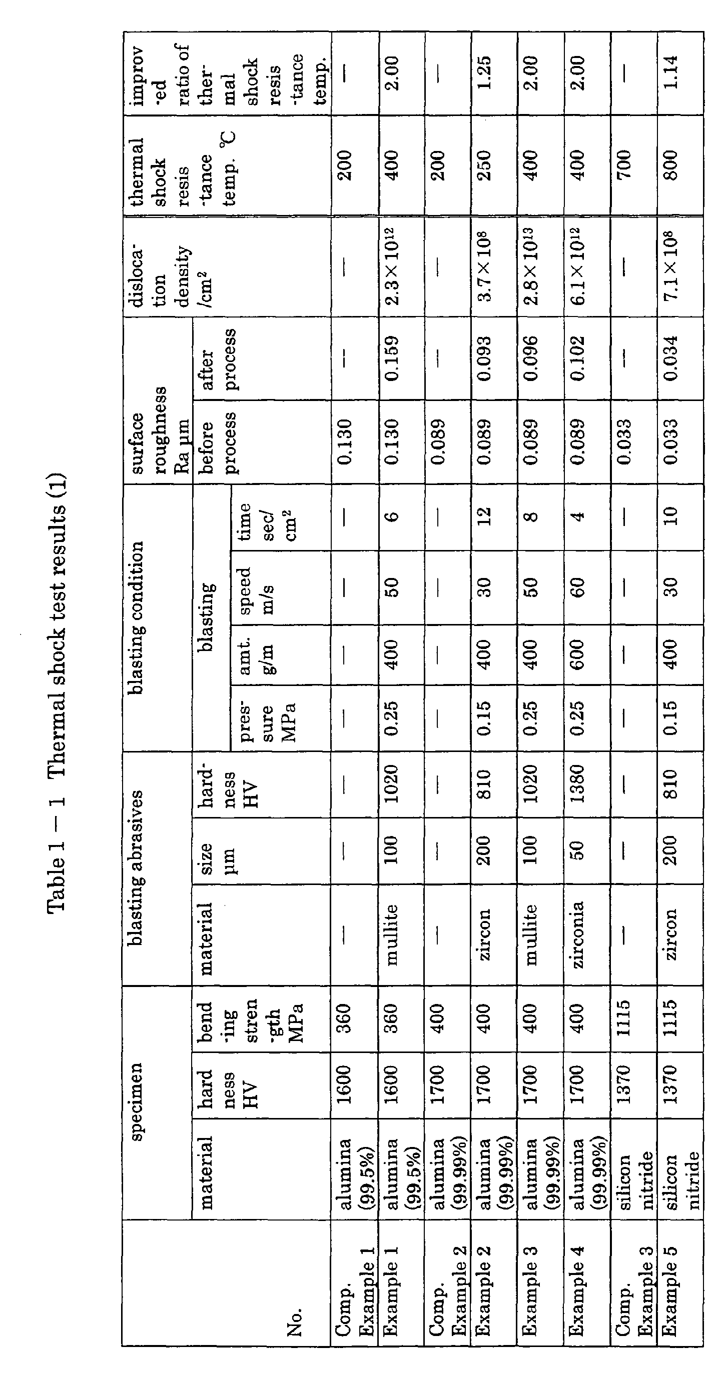

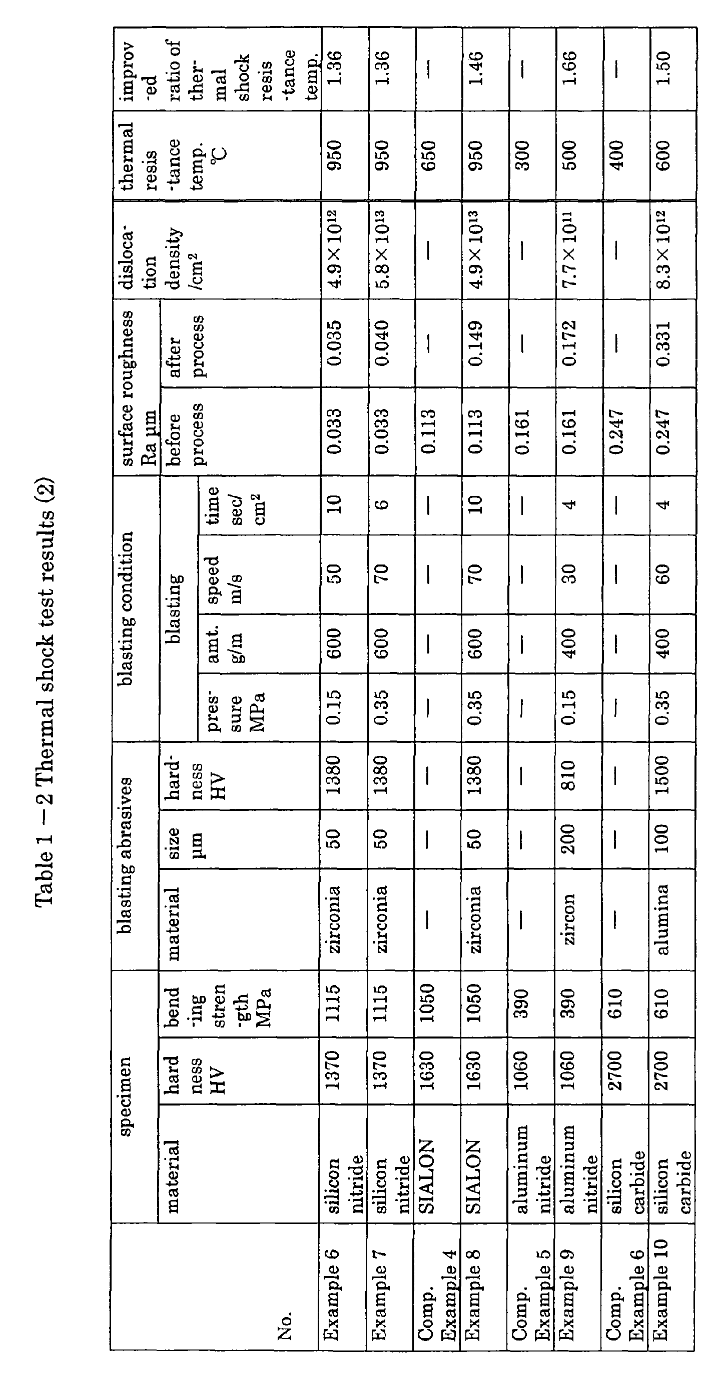

From the results recorded in Tables 1-1 and 1-2, compared with thermal shock resistance of non-treated specimen (refer to column of Comparative Examples), thermal shock resistance of a specimen which is treated by a method of this invention is improved along with increase of dislocation density of linear dislocation formed on the surface of specimen after plastic working (fine blast working), and is improved to have durability at temperature difference of 400°C in a case of alumina, 950°C in a case of silicon nitride, 950°C in a case of SIALON, 500°C in a case of aluminum nitride and 600°C in a case of silicon carbide.

### Heat cycle test of Examples 1-10 and Comparative Examples 1-6

Test pieces of Examples 1-10 and Comparative Examples 1-6 which are prepared for previous thermal shock test are used for thermal shock test by heat cycle;

10 pieces each of said test pieces are set into an infrared heating furnace and the temperature is elevated from ordinary temperature to 1200°C by 10minutes and maintained for 15minutes, then cooled down to ordinary temperature. This cycle is repeated for 50 cycles and occurrence of crack on each specimen is observed. Results are shown in Tables 2-1 and 2-2. Numerical values mentioned in heat cycle resistance indicate numbers of specimen on which any crack is observed.

**Table 2- 1 Heat cycle test results (1)**

| No. | specimen | | | blasting abrasives | | | blasting condition | | | | surface roughness Ra µm | | dislocation density/cm² | heat cycle resistance (numbers of test pieces in which crack is observed) |
|---|---|---|---|---|---|---|---|---|---|---|---|---|---|---|
| | material | hardness HV | bending strength MPa | material | size µm | hardness HV | blasting | | | | before process | after process | | |
| | | | | | | | pressure MPa | amt. g/m | speed m/s | time sec/ cm² | | | | |
| Comp. Example 1 | alumina (99.5%) | 1600 | 360 | - | - | - | - | - | - | - | 0.130 | - | - | 10 |
| Example 1 | alumina (99.5%) | 1600 | 360 | mullite | 100 | 1020 | 0.25 | 400 | 50 | 6 | 0.130 | 0.159 | 2.3×10¹² | 0 |
| Comp. Example 2 | alumina (99.99%) | 1700 | 400 | - | - | - | - | - | - | - | 0.089 | - | - | 10 |
| Example 2 | alumina (99.99%) | 1700 | 400 | zircon | 200 | 810 | 0.15 | 400 | 30 | 12 | 0.089 | 0.093 | 3.7 × 10⁸ | 7 |
| Example 3 | alumina (99.99%) | 1700 | 400 | mullite | 100 | 1020 | 0.25 | 400 | 50 | 8 | 0.089 | 0.096 | 2.8 × 10¹³ | 0 |
| Example 4 | alumina (99.99%) | 1700 | 400 | zirconia | 50 | 1380 | 0.25 | 600 | 60 | 4 | 0.089 | 0.102 | 6.1×10¹² | 0 |
| Comp. Example 3 | silicon nitride | 1370 | 1115 | - | - | - | - | - | - | - | 0.033 | - | - | 2 |
| Example 5 | silicon nitride | 1370 | 1115 | zircon | 200 | 810 | 0.15 | 400 | 30 | 10 | 0.033 | 0.034 | 7.1 × 10⁸ | 1 |

**Table 2-2 Heat cycle test results (2)**

| No. | specimen | | | blasting abrasives | | | blasting condition | | | | surface roughness Ra µm | | dislocation density/cm² | heat cycle resistance (numbers of test pieces in which crack is observed) |
|---|---|---|---|---|---|---|---|---|---|---|---|---|---|---|
| | material | hardness HV | bending strength MPa | material | size µm | hardness HV | blasting | | | | before process | after process | | |
| | | | | | | | pressure MPa | amt. g/m | speed m/s | time sec/ cm² | | | | |
| Example 6 | silicon nitride | 1370 | 1115 | zirconia | 50 | 1380 | 0.15 | 600 | 50 | 10 | 0.033 | 0.035 | 4.9 × 10¹² | 0 |
| Example 7 | silicon nitride | 1370 | 1115 | zirconia | 50 | 1380 | 0.35 | 600 | 70 | 6 | 0.033 | 0.040 | 5.8 × 10¹³ | 0 |
| Comp. Example 4 | SIALON | 1630 | 1050 | - | - | - | - | - | - | - | 0.113 | - | - | 2 |
| Example 8 | SIALON | 1630 | 1050 | zirconia | 50 | 1380 | 0.35 | 600 | 70 | 10 | 0.113 | 0.149 | 4.9 × 10¹³ | 0 |
| Comp. Example 5 | aluminum nitride | 1060 | 390 | - | - | - | - | - | - | - | | - | - | 6 |
| Example 9 | aluminum nitride | 1060 | 390 | zircon | 200 | 810 | 0.15 | 400 | 30 | 4 | 0.161 | 0.172 | 7.7×10¹¹ | 0 |
| Comp. Example 6 | silicon carbide | 2700 | 610 | - | - | - | - | - | - | - | | - | - | 4 |
| Example 10 | silicon carbide | 2700 | 610 | alumina | 100 | 1500 | 0.35 | 400 | 60 | 4 | 0.247 | 0.331 | 8.3 × 10¹² | 0 |

As clearly understood from Tables 2-1 and 2-2, regarding a specimen which is treated by a method of this invention, dislocation density of linear dislocation formed on the surface of specimen increases after plastic working (fine blast working) and on a test piece to which heat cycle test is carried out any crack becomes not to be observed. On the contrary, crack is observed on a non-treated test piece by a method of this invention. As mentioned above, it becomes clear that the heat cycle characteristic is remarkably improved and effectiveness of the present invention can be confirmed.

### Measurement of relationship between thermal shock temperature difference and length of crack of Example 1 and Comparative Example

Experiment using thermal shock resistance test piece of single crystal alumina;

Fine blast working treatment is carry out on an single crystal alumina test piece (shape 10 × 10 × 1t mm) by conditions indicated in Table 1 and a specimen for thermal shock test is prepared. In Table 2, TEM picture of linear dislocation formed on the surface of single crystal alumina test piece obtained by fine blast working. Indentations by Vickers Hardness tester is marked on prepared thermal shock test piece and heated and maintained at 300°C, 500°Cand 700°C for 10minites then thrown in water (20°C) and left for 5 minutes. After that, length of crack of indentations of said test piece is measured, and appearance of crack of test pieces to which dislocation is introduced and not introduced are observed. Results are shown in Fig.3. Compared with non-treated test piece, progress of crack can not be observed even in 700°C and excellent effect is recognized.

**Table 3 Preparation condition of thermal shock test piece (single crystal alumina)**

| No. | specimen | | | blasting abrasives | | | blasting condition | | | | surface roughness Ra µm | | dislocation density/cm² |
|---|---|---|---|---|---|---|---|---|---|---|---|---|---|
| | material | hardness HV | bending strength MPa | material | size µm | hardness HV | blasting | | | | before process | after process | |
| | | | | | | | pressure MPa | amt. g/min | speed m/s | time sec/ cm² | | | |
| Comparative Example 1 | single crystal alumina | 1630 | - | - | - | - | - | - | - | - | - | - | - |
| Example 1 | single crystal alumina | 1630 | - | mullite | 100 | 1020 | 0.45 | 80 | 85 | 12 | 0.016 | 0.059 | 1.6 × 10¹² |

### INDUSTRIAL APPLICABILITY

The present invention can be used in a process in which cycles of rapid heating and rapid cooling is included. For example, the present invention can be applied to improve thermal shock resistance of a dome for etcher, an electrostatic chuck, a vacuum chuck, a susceptor, a handling arm, a dummy wafer, a heater for wafer heating, window of a high temperature reaction furnace, a reaction tube of diffusion furnace, a wafer boat, a thermocouple protecting tube, a radiant tube for aluminum alloy melting, a stoke for low pressure casting, a stirring propeller for aluminum alloy melting, sleeve for die cast, piping component, a high temperature bearing, a shaft, a heat sink substrate for power module, a heat radiation insulated substrate and a turbine blade.

## Claims

1. A method for improving surface thermal shock resistance of a member made of ceramics to which thermal shock resistance is required comprising, forming homogeneously distributed linear dislocation structure on the surface of the member made of ceramics to which thermal shock resistance is required by blasting abrasives composed of fine particles whose average particle size is from 5 µm to 200 µm and whose surface shape is convex, wherein Vickers hardness (HV) of said fine particles is 800 or more and equal to or less than the hardness of the member made of ceramics to which thermal shock resistance is required.

2. The method for improving surface thermal shock resistance of a member made of ceramics to which thermal shock resistance is required of claim 1, wherein the homogeneously distributed linear dislocation on the surface of the member made of ceramics to which thermal shock resistance is required forms a dislocation structure whose dislocation density is measured with the transmission electron microscope and is from 1 × 10⁴ to 9 × 10¹³cm⁻².

3. The method for improving surface thermal shock resistance of a member made of ceramics to which thermal shock resistance is required of claim 1, wherein plastic working is carried out by blasting pressure; 0.1-1.0MPa, blasting rate; 20m/sec - 250m/sec, blasting amount; 50g/min - 800g/min, blasting time; 1sec/cm²-60sec/cm².

4. The method for improving surface thermal shock resistance of a member made of ceramics to which thermal shock resistance is required of claim 3, wherein the homogeneously distributed linear dislocation on the surface of the member made of ceramics to which thermal shock resistance is required forms a dislocation structure whose dislocation density is measured with the transmission electron microscope and is from 1 × 10⁴ to 9 × 10¹³cm⁻².

5. A thermal shock resistance member comprising, a substrate composing a member made of ceramics to which thermal shock resistance is required is at least one selected from the group consisting of alumina, silicon nitride, SIALON, aluminum nitride or silicon carbide, forming a structure of dislocation density from 1 × 10⁴ to 9 × 10¹³cm⁻² of homogeneously distributed linear dislocation.

6. The thermal shock resistance member of claim 5, wherein the member made of ceramics to which thermal shock resistance is required is a dome for etcher, an electrostatic chuck, a vacuum chuck, a susceptor, a handling arm, a dummy wafer, a heater for wafer heating, window of a high temperature reaction furnace, a reaction tube of diffusion furnace , a wafer boat, a thermocouple protecting tube, a radiant tube for aluminum alloy melting, a stoke for low pressure casting, a stirring propeller for aluminum alloy melting, sleeve for die cast, piping component, a high temperature bearing, a shaft, a heat sink substrate for power module, a heat radiation insulated substrate and a turbine blade.
